# EUROPÄISCHE PATENTSCHRIFT

(11) **EP 1 730 091 B1**
(45) Veröffentlichungstag und Bekanntmachung des Hinweises auf die Patenterteilung: **25.08.2010**
(21) Anmeldenummer: 05716396.6
(22) Anmeldetag: 26.03.2005
(51) Int. Cl.: C04B 41/00, C04B 35/109, C03C 23/00, B23K 26/08

(54) **Verfahren zur Behandlung von Feuerfestmaterial und seine Verwendung**
Process for treating a refractory material and its use.
Procédé de traitement d'un materiau refractaire et son utilisation

(30) Priorität: 30.03.2004 DE 102004015357
(43) Veröffentlichungstag der Anmeldung: 13.12.2006
(73) Patentinhaber: Schott AG, 55122 Mainz (DE)
(72) Erfinder: WITZMANN, André, 95674 Waldershof (DE); TRINKS, Ulla, 95666 Mitterteich (DE); ARTMANN, Reiner, 95666 Mitterteich (DE)
(74) Vertreter: Fuchs
(86) Internationale Anmeldenummer: PCT/EP2005/003227
(87) Internationale Veröffentlichungsnummer: WO 2005/095304

(56) Entgegenhaltungen:
- WO-A-95/35269
- DE-A1- 3 735 444
- DE-A1- 4 405 203
- GB-A- 1 307 263
- GB-A- 2 349 609
- DATABASE WPI Section Ch, Week 198749 Derwent Publications Ltd., London, GB; Class L02, AN 1987-344199 XP002328176 & JP 62 246885 A (MITSUBISHI MINING & CEMENT CO) 28. Oktober 1987 (1987-10-28)
- NAKADA K ET AL: "SURFACE TREATMENT OF OXIDE CERAMICS" CHEMICAL ABSTRACTS + INDEXES, AMERICAN CHEMICAL SOCIETY. COLUMBUS, US, Bd. 108, Nr. 20, 1. Mai 1988 (1988-05-01), Seite 313, XP000018794 ISSN: 0009-2258
- GEDRAT O ET AL: "BEARBEITUNG TECHNISCHER KERAMIK MIT LASERSTRAHLUNG" SPRECHSAAL, VERLAG DES SPRECHSAAL MULLER UND SCHMIDT. COBURG, DE, Bd. 124, Nr. 9, 1. September 1991 (1991-09-01), Seiten 554,556,559-56, XP000235168 ISSN: 0341-0676

## Beschreibung

Die Erfindung betrifft ein Verfahren zur Behandlung von Feuerfestmaterial, gemäß Anspruch 1. Die Erfindung betrifft auch die Verwendungen des Feuerfestmaterials, gemäß Anspruch 10.

Bei der Glasherstellung kommen Glaswannen, Speiserinnen, Pfeifen, Ziehwerkzeuge und dergleichen zum Einsatz, die aus Feuerfestmaterial bestehen oder mit Feuerfestmaterial ausgekleidet sind und die den hohen Temperaturen der Glasschmelze standhalten müssen.

Unter Feuerfestmaterial werden Schamotte, Feuerleichtsteine, Silimanitsteine, Zirkonsteine u. zirkonhaltige Steine, sowie schmelzgegossene Steine mit Zusammensetzungen aus Al₂O₃ ZrO₂ und/oder MgO bzw. Chromoxid verstanden.

Diese Feuerfestmaterialien besitzen zum Teil große Poren, Ausblühungen und eine hohe Gasdurchlässigkeit, was wiederum die Glasschmelze nachteilig beeinflusst, indem Blasen, Kristalle, Knoten, Steine u. s. w. entstehen können oder von der Schmelze aufgenommen werden. Auch durch die mechanische Bearbeitung von Feuerfestmaterialien entstehen Poren, die durch chemischen Angriff der Glasschmelze zur Korrosion des Feuerfestmaterials führen. Da die Glasschmelze, Abgase oder Brennerflammen das Feuerfestmaterial korrodieren, sind die Standzeiten des Feuerfestmaterials nicht zufriedenstellend, so dass bereits nach kurzer Einsatzzeit der Ausbau des Feuerfestmaterials vorgenommen werden muss, was mit entsprechenden Kosten verbunden ist.

Aus DE 102 44 040 C1 ist ein Sinterquarzgutmaterial für die Verwendung in Glasschmelzaggregaten bekannt. Dieses Material, das nicht unter die vorne gegebene Definition eines Feuerfestmaterials fällt, ist zweischichtig aufgebaut und besteht aus einer feinkörnigen, mit der Schmelze in Kontakt stehenden Schicht und einer grobkörnigen Schicht. Die feinkörnige Schicht, die auch durch Hitzeeinwirkung oder durch gezielte Verunreinigungen mit Alkalien verglast sein kann, wandelt sich leicht in eine gegenüber der Schmelze beständigere Cristobalitschicht um, während die grobkörnige Schicht für eine gute mechanische Festigkeit sorgt. Die Herstellung solcher Bauteile ist jedoch kompliziert und das vollständig aus SiO₂ bestehende Material ist bei höheren Temperaturen, die z.B. bei der Herstellung von Speziaigläsern auftreten, einen hohem Verschleiß unterworfen.

Aufgabe der Erfindung ist es daher, ein Verfahren zur Behandlung von Feuerfestmaterial einer Dannerpfeife bestehend aus Schamotte, Feuerleichtsteinen, Silimanitsteinen, Zirkon- und zirkonhaltigen Steinen, sowie schmelzgegossenen Steinen mit Zusammensetzungen aus Al₂O₃, ZrO₂ und/oder MgO bzw. Chromoxid zur Verfügung zu stellen, das einerseits die Korrosion von Feuerfestmaterial verhindert und andererseits die Glasschmelze bzw. die Eigenschaften des Glasprodukts nicht nachteilig beeinflusst.

Weiterhin ist es auch Aufgabe der Erfindung, besondere Verwendungen des behandelten Feuerfestmaterials, anzugeben.

Das Verfahren zur Behandlung von Feuerfestmaterial einer Dannerpfeife bestehend aus Schamotte, Feuerleichtsteinen, Silimanitsteinen, Zirkon- und zirkonhaltigen Steinen, sowie schmelzgegossenen Steinen mit Zusammensetzungen aus Al₂O₃, ZrO₂ und/oder MgO bzw. Chromoxid sieht vor, dass die Oberfläche des Feuerfestmaterials mittels Laserstrahlung gemäß Anspruch 1 behandelt wird.

Es hat sich herausgestellt, dass durch die Laserbehandlung eine Minimierung der Porosität sowie eine Verfestigung und Härtung der Oberfläche durch teilweise oder vollständige Verglasung der silikatischen Bestandteile des Feuerfestmaterials erfolgt. Es hat sich gezeigt, dass die mechanischen Spannungen, die bei der Umformung der Oberflächenschicht generiert werden, die mechanische Festigkeit der Oberflächenschicht nicht negativ beeinflussen.

Vorzugsweise wird die Oberfläche des Feuerfestmaterials durch die Laserstrahlung auf mindestens 2000°C aufgeheizt. Das Verfahren hat den Vorteil, dass nur die relevante Oberfläche und nicht das gesamte Material aufgeheizt werden muss. Die Verglasung der Oberfläche erfordert eine intensive Wärmestrahlungsquelle (wie z.B. H₂- oder Plasmabrenner bzw. Laser). Laserstrahlung hat den Vorteil, dass sie eine hohe Energiedichte, eine definierte Formung des Heizspots und eine sehr gute Einstellbarkeit und Reproduzierbarkeit der Heizleistung bietet. Der Laserenergieeintrag ist nicht an ein Medium gebunden, wie im Fall z.B. schnell strömende Brennergase, die zu einer Verformung der sich bildenden Schmelzschicht als auch zu Kontaminationen führen können.

Vorzugsweise beträgt die Leistungsdichte, die in die Oberfläche eingebracht wird, ca. 2-4 W/mm², insbesondere ca. 3 W/mm². Die effektive Bestrahlungszeit beträgt 0,1 bis 5 s, vorzugsweise 0,5 bis 3 s. Es werden vorteilhafterweise Laserstrahlen mit einer Wellenlänge im Bereich von 9 bis 11 µm verwendet.

Vorzugsweise wird ein CO₂-Laser verwendet. CO₂-Laser haben den Vorteil, dass die abgestrahlte Wellenlänge im Bereich von 10,6 µm liegt. Es hat sich gezeigt, dass CO₂-Laser die Hochleistungslaser sind, die am besten an die Absorptionseigenschaften des Feuerfestmaterials angepasst sind. Das Laserbehandlungsverfahren hat weiterhin den Vorteil, dass keine Nebenprodukte wie z.B. COₓ oder Wasserdampf entstehen, die die Oberfläche z.B. bei der Anwendung von H₂-Brennern nachteilig beeinflussen könnten.

Vorzugsweise wird die Oberfläche mittels eines Laserstrahls mit einer Vorschubgeschwindigkeit von 1-10 mm/s behandelt, wobei der Laserstrahl auf der Oberfläche einen Durchmesser von 2-5 mm aufweist. Es werden dadurch Leistungsdichten im Bereich von 2-4 W/mm² erzeugt, die zu einer geschlossenen glasartigen Schicht auf der Oberfläche des Feuerfestmaterials führen, ohne dass ein Materialabtrag erfolgt.

Das Feuerfestmaterial kann nach der Laserbehandlung wie üblich getempert werden.

Die Oberflächenschicht ist eine geschlossene glasartige Schicht, die als Hauptbestandteile die Komponenten des Feuerfestmaterials aufweist.

Vorzugsweise weist das Feuerfestmaterial eine Oberflächenschicht der Dicke von 100-1000 µm auf. Es hat sich gezeigt, dass derartige Dicken ausreichend sind, um Transportvorgänge durch diese Schicht aus dem Feuerfestmaterial in die Glasschmelze und umgekehrt wirkungsvoll auszuschließen.

Die Verwendungen dieses mit Laserstrahlung behandelten Feuerfestmaterials bestehend aus Schamotte, Feuerleichtsteinen, Silimanitsteinen, Zirkon- und zirkonhaltigen Steinen, sowie schmelzgegossenen Steinen mit Zusammensetzungen aus Al₂O₃, ZrO₂ und/oder MgO bzw. Chromoxid wobei nur dessen Oberfläche mittels Laserstrahlung behandelt ist und das Feuerfestmaterial eine geschlossene glasartige Schicht besitzt, die als Hauptbestandteile die Komponenten des Feuerfestmaterials aufweist, bestehen darin, das Feuerfestmaterial für die Ausbildung von Dannerpfeifen, und/oder Ziehwerkzeuge für den Kontakt mit Glasschmelzen bei der Glasherstellung einzusetzen.

Weitere Verwendungen betreffen den Ofenbau, insbesondere den Glasofenbau und hier außer den Glaswannen und Speiserrinnen auch die Hafenöfen, wo das Feuerfestmaterial für eine höhere Beständigkeit gegen aggressive Gase, hohe Temperaturen usw. eingesetzt wird.

Nachfolgend werden beispielhafte Ausführungsformen anhand der Figuren erläutert.

Es zeigen:

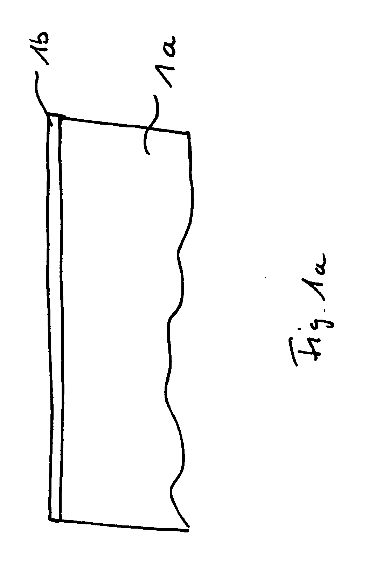

- Fig. 1a: einen schematischen Schnitt durch das Feuerfestmaterial

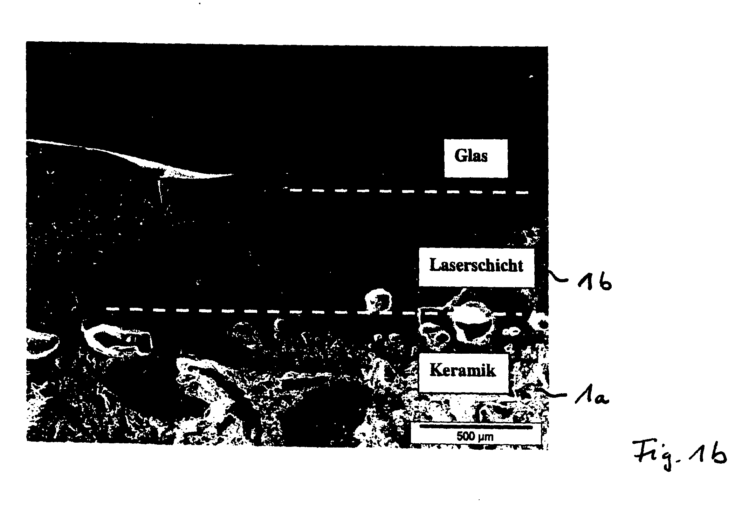

- Fig. 1b: eine REM-Aufnahme von Feuerfestmaterial mit angrenzender Glasschicht.

In einer Versuchsanordnung wurde ein Feuerfestmaterial, wie es für eine Dannerpfeife verwendet wird, einer Laserstrahlbehandlung unterzogen. Dazu wurde ein 100 W CO₂-Laser mit einem Strahldurchmesser von etwa 4 mm eingesetzt. Eine Laseroptik wurde mit einer Z-ϕ-Translationseinheit (2mm Schritte) über das Feuerfestmaterial bewegt, so dass eine sich leicht überlappende Laserspur auf dem Feuerfestkörper erzeugt wurde. Bei einer Laserleistung von etwa 40 W wurde die Vorschubgeschwindigkeit zwischen 1,65 und 5 mm/s variiert. Auf diese Weise wurde eine Dannerpfeife mit einem Durchmesser von 190 mm bearbeitet. Für einen Umfangsstreifen der Breite 20 cm wurden ca. 8 h benötigt.

Anschließend wurde eine Glasschmelze mit diesem Feuerfestmaterial kontaktiert. Bei einer Belastung mit einer Glasschmelze von ca. 1280 °C stellte sich heraus, dass die an der Oberfläche gebildete glasartige Schicht stabil bleibt. Durch den Einsatz von Werkzeugen mit einer laserbehandelten Oberfläche werden die insgesamt erforderlichen Umrüstzeiten verkürzt, die Werkzeugkorrosion verringert und die Qualität der gefertigten Produkte erhöht.

In der Figur 1a ist schematisch ein Schnitt durch ein Feuerfestmaterial 1a dargestellt. Durch die Laserbehandlung erfolgt an der Oberfläche eine Umwandlung, so dass sich eine glasartige Oberflächenschicht 1 b ausbildet.

In der Figur 1b ist eine REM-Aufnahme einer solchen mit Laserstrahlung behandelten Feuerfestschicht dargestellt. Es ist deutlich zu sehen, dass die als "Laserschicht" bezeichnete Schicht 1 b eine deutlich dichtere Struktur als die darunter liegende Schicht 1a aufweist. Die angrenzende Glasschicht ist blasenfrei.

## Patentansprüche

1. Verfahren zur Behandlung eines Feuerfestmaterials einer Dannerpfeife für den Kontakt mit einer Glasschmelze bei der Glasherstellung, wobei das Feuerfestmaterial aus Schamotte, Feuerleichtsteinen, Sillimanitsteinen, Zirkon- und zirkonhaltigen Steinen sowie schmelzgegossenen Steinen mit Zusammensetzungen aus Al₂O₃, ZrO₂ und/oder MgO oder Chromoxid besteht, wobei nur die Oberfläche mittels Laserstrahlung behandelt und eine Oberflächenschicht erzeugt wird, die eine geschlossene glasartige Schicht bildet, die als Hauptbestandteile die Komponenten des Feuerfestmaterials aufweist.

2. Verfahren nach Anspruch 1, **dadurch gekennzeichnet, dass** die Oberfläche durch Laserstrahlung auf mindestens 2000°C aufgeheizt wird.

3. Verfahren nach Anspruch 1 oder 2, **dadurch gekennzeichnet, dass** eine Leistungsdichte von 2 - 4 Watt pro mm² in die Oberfläche eingebracht wird.

4. Verfahren nach einem der Ansprüche 1 bis 3, **dadurch gekennzeichnet, dass** die Laserbehandlung mit einer effektiven Bestrahlungszeit von 0,1 - 5 Sekunden durchgeführt wird.

5. Verfahren nach einem der Ansprüche 1 bis 4, **dadurch gekennzeichnet, dass** die Oberfläche mittels eines Laserstrahls mit einer Vorschubgeschwindigkeit von 1 - 10 mm pro Sekunde behandelt wird, wobei der Laserstrahl auf der Oberfläche einen Durchmesser von 2 - 5 mm aufweist.

6. Verfahren nach einem der Ansprüche 1 bis 5, **dadurch gekennzeichnet, dass** ein Laserstrahl mit einer Wellenlänge im Bereich von 9 - 11 µm verwendet wird.

7. Verfahren nach einem der Ansprüche 1 bis 6, **dadurch gekennzeichnet, dass** ein CO₂-Laser verwendet wird.

8. Verfahren nach einem der Ansprüche 1 bis 7, **dadurch gekennzeichnet, dass** das Feuerfestmaterial nach der Laserbehandlung getempert wird.

9. Verfahren nach einem der vorherigen Ansprüche, **dadurch gekennzeichnet, dass** die behandelte Oberflächenschicht eine Dicke von 100 bis 1000 µm aufweist.

10. Verwendung eines Feuerfestmaterials, bestehend aus Schamotte, Feuerleichtsteinen, Silimanitsteinen, Zirkon oder zirkonhaltigen Steinen, sowie schmelzgegossenen Steinen mit Zusammensetzungen aus Al₂O₃, ZrO₂ und/oder MgO oder Chromoxid, wobei nur dessen Oberfläche mittels Laserstrahlung behandelt ist und das Feuerfestmaterial eine geschlossene glasartige Schicht besitzt, die als Hauptbestandteile die Komponenten des Feuerfestmaterials aufweist, für die Ausbildung von Dannerpfeifen und/oder Ziehwerkzeugen für den Kontakt mit Glasschmelzen bei der Glasherstellung.

11. Verwendung eines Feuerfestmaterials nach Anspruch 10, **dadurch gekennzeichnet, dass** seine Oberfläche durch die Laserstrahlung auf mindestens 2000° C aufgeheizt worden ist.

12. Verwendung eines Feuerfestmaterials nach einem der Ansprüche 10 oder 11, **dadurch gekennzeichnet, dass** das Feuerfestmaterial nach der Laserbehandlung getempert wurde.

13. Verwendung eines Feuerfestmaterials nach einem der Ansprüche 10 bis 12, **dadurch gekennzeichnet, dass** die behandelte Oberflächenschicht eine Dicke von 100 bis 1000 µm aufweist.

## Claims

1. Process for treating a refractory material of a Danner blowpipe for contact with a glass melt in glassmaking, wherein the refractory material consists of fireclay, light refractory bricks, sillimanite bricks, zirconium bricks and zirconium-containing bricks and also fusion-cast bricks having compositions of Al₂O₃, ZrO₂ and/or MgO or chromium oxide, wherein only the surface is treated by means of laser radiation and a surface layer, which forms a closed, vitreous layer having the components of the refractory material as main constituents, is produced.

2. Process according to Claim 1, **characterized in that** the surface is heated to at least 2000°C by laser radiation.

3. Process according to Claim 1 or 2, **characterized in that** a power density of 2-4 watts per mm² is introduced into the surface.

4. Process according to one of Claims 1 to 3, **characterized in that** the laser treatment is carried out with an effective irradiation time of 0.1-5 seconds.

5. Process according to one of Claims 1 to 4, **characterized in that** the surface is treated by means of a laser beam at a feed rate of 1-10 mm per second, the laser beam having a diameter of 2-5 mm on the surface.

6. Process according to one of Claims 1 to 5, **characterized in that** a laser beam having a wavelength in the range of 9-11 µm is used.

7. Process according to one of Claims 1 to 6, **characterized in that** a CO₂ laser is used.

8. Process according to one of Claims 1 to 7, **characterized in that** the refractory material is tempered after the laser treatment.

9. Process according to one of the preceding claims, **characterized in that** the thickness of the treated surface layer is 100 to 1000 µm.

10. Use of a refractory material, consisting of fireclay, light refractory bricks, sillimanite bricks, zirconium bricks or zirconium-containing bricks and also fusion-cast bricks having compositions of Al₂O₃, ZrO₂ and/or MgO or chromium oxide, only the surface of said material being treated by means of laser radiation and the refractory material having a closed, vitreous layer having the components of the refractory material as main constituents, for the design of Danner blowpipes and/or drawing tools for contact with glass melts in glassmaking.

11. Use of a refractory material according to Claim 10, **characterized in that** the surface of said material has been heated to at least 2000°C by the laser radiation.

12. Use of a refractory material according to either of Claims 10 and 11, **characterized in that** the refractory material has been tempered after the laser treatment.

13. Use of a refractory material according to one of Claims 10 to 12, **characterized in that** the thickness of the treated surface layer is 100 to 1000 µm.

## Revendications

1. Procédé de traitement d'un matériau réfractaire pour un évent Danner destiné à entrer en contact avec le verre en fusion en fabrication de verre, le matériau réfractaire étant constitué d'argile réfractaire, de roche réfractaire légère, de blocs de silimanite, de blocs de zirconie ou contenant de la zirconie ainsi que de blocs coulés à l'état fondu dont la composition contient Al₂O₃, ZrO₂ et/ou MgO ou de l'oxyde de chrome, et seule sa surface étant traitée par un faisceau laser pour obtenir une couche de surface qui forme une couche vitreuse fermée qui présente comme composant principal les composants de matériau réfractaire.

2. Procédé selon la revendication 1, **caractérisé en ce que** la surface est chauffée à au moins 2 000°C par le rayonnement laser.

3. Procédé selon les revendications 1 ou 2, **caractérisé en ce que** l'on apporte dans la surface une densité de puissance de 2 à 4 watts par mm².

4. Procédé selon l'une des revendications 1 à 3, **caractérisé en ce que** le traitement par laser est réalisé pendant une durée effective d'irradiation de 0,1 à 5 secondes.

5. Procédé selon l'une des revendications 1 à 4, **caractérisé en ce que** la surface est traitée au moyen d'un faisceau laser avançant à une vitesse de 1 à 10 mm par seconde, le faisceau laser présentant sur la surface un diamètre de 2 à 5 mm.

6. Procédé selon l'une des revendications 1 à 5, **caractérisé en ce qu'**il utilise un faisceau laser dont la longueur d'onde est comprise dans la plage de 9 à 11 µm.

7. Procédé selon l'une des revendications 1 à 6, **caractérisé en ce qu'**il utilise un laser au CO₂.

8. Procédé selon l'une des revendications 1 à 7, **caractérisé en ce qu'**après le traitement au laser, le matériau réfractaire subit un traitement thermique.

9. Procédé selon l'une des revendications précédentes, **caractérisé en ce que** la couche traitée de la surface présente une épaisseur de 100 à 1 000 µm.

10. Utilisation d'un matériau réfractaire constitué d'argile réfractaire, de roche réfractaire légère, de blocs en silimanite, de zirconie ou de blocs contenant de la zirconie ainsi que de blocs coulés à l'état fondu et dont la composition contient Al₂O₃, ZrO₂ et/ou MgO ou l'oxyde de chrome, seule sa surface étant traitée au moyen d'un rayonnement laser et le matériau réfractaire possédant une couche vitreuse fermée qui présente comme composants principaux les composants du matériau réfractaire pour la formation d'évents Danner et/ou d'outils d'extraction destinés à entrer en contact avec du verre en fusion en fabrication de verre.

11. Utilisation d'un matériau réfractaire selon la revendication 10, **caractérisée en ce que** sa surface a été chauffée à au moins 2 000°C par le rayonnement laser.

12. Utilisation d'un matériau réfractaire selon l'une des revendications 10 ou 11, **caractérisée en ce que** le matériau réfractaire subit un traitement thermique après le traitement au laser.

13. Utilisation d'un matériau réfractaire selon l'une des revendications 10 à 12, **caractérisée en ce que** la couche traitée de surface présente une épaisseur de 100 à 1 000 µm.
